# EUROPÄISCHE PATENTANMELDUNG

(11) **EP 1 182 560 A2**
(43) Veröffentlichungstag der Anmeldung: **27.02.2002**
(21) Anmeldenummer: 01000365.5
(22) Anmeldetag: 14.08.2001
(51) Int. Cl.: G06F 12/08

(54) **Prozessor-Speicher-System**

(30) Priorität: 17.08.2000 DE 10040267
(71) Anmelder: Philips Corporate Intellectual Property GmbH, 52064 Aachen (DE); Koninklijke Philips Electronics N.V., 5621 BA Eindhoven (NL)
(72) Erfinder: Hertwig, Axel, Habsburgerallee 11 52064, Aachen (DE); Bauer, Harald, Habsburgerallee 11 52064, Aachen (DE); Fawer, Urs, Habsburgerallee 11 Aachen, 52064 (DE)
(74) Vertreter: Volmer, Georg, Dipl.-Ing.

(57) **Zusammenfassung**

Prozessor-Speicher-System, umfassend:
- einen Prozessorbaustein mit einem Prozessor und wenigstens einem ersten integrierten RAM-Speicher,
- wenigstens einen über ein Interface mit dem Prozessorbaustein gekoppelten zweiten externen Speicher,
- einen am Prozessorbaustein integrierten programmierbaren Speicherverwaltungsbaustein, welcher bei einer vom Prozessor angeforderten Datenadresse prüft, ob diese Datenadresse in dem ersten RAM-Speicher, der als schneller Speicher dient und in den Daten aus dem externen Speicher vorauseilend geladen sind, vorhanden sind,
- wobei bei Vorhandensein der Datenadresse im RAM-Speicher der Speicherverwaltungsbaustein auf die RAM-Speicheradresse, unter welcher die zur Datenadresse gehörenden Daten liegen, zeigt und die Daten aus dem RAM-Speicher ausgelesen werden,
- wobei bei Nichtvorhandensein der Datenadresse im RAM-Speicher der Speicherverwaltungsbaustein einen Interrupt-Befehl an den Prozessor gibt, welcher anschließend das Nachladen der gesuchten Datenadresse aus dem externen Speicher in den RAM-Speicher veranlasst.

## Beschreibung

Die Erfindung betrifft ein Prozessor-Speicher-System.

Solche Prozessor-Speicher-Systeme kommen überall dort zum Einsatz, wo Daten gespeichert, verarbeitet und übertragen werden sollen. Typische Anwendungsgebiete finden sich beispielsweise in der mobilen Funktelefonie, bei persönlichen digitalen Assistenten und bei Mini-Computern. Innerhalb dieses Systems übernimmt der Prozessor die eigentliche Datenverarbeitungsleistung, in dem oder den Speichern sind die vom Prozessor benötigten Daten, bei denen es sich in der Regel um konstante Daten wie beispielsweise Programme oder Tabellendaten handelt, abgelegt. Diese werden im Bedarfsfall vom Prozessor aus dem Speicher ausgelesen.

Im Rahmen dieser Prozessor-Speicher-Kommunikation bzw. der Daten- oder Speicherverwaltung selbst sind verschiedene Konzepte bekannt. Zum einen werden Cache-Speicher verwendet, zum anderen kommen virtuell memories, also virtuelle Speicher zum Einsatz Ein Cache-Speicher ist ein schneller Speicher in den häufig und schnell benötigte Daten aus einem Hauptspeicher geladen werden. Wird ein Datum vom Prozessor angefragt so wird zunächst überprüft, ob dieses Datum im Cache-Speicher bereits vorhanden ist. Falls ja wird es dort ausgelesen, falls nein wird das fehlende Datum aus dem Hauptspeicher in den Cache-Speicher nachgeladen. In einem solchen Fall spricht man von einem cachemiss. Im Falle eines cachemiss wird während der Zeit, während welcher die fehlenden Daten aus dem Hauptspeicher nachgeladen werden, der Prozessor durch Einfügen von Waitstates angehalten, das heißt, der Prozessor arbeitet während dieser Zeit nicht. Abhängig davon, wie umfangreich der fehlende nachzuladende Datensatz ist, ist diese Haltezeit des Prozessors länger oder kürzer.

Ein virtueller Speicher, bzw. ein virtuell memory dient dazu, einen Hauptspeicher optimal nutzen zu können. Als solch ein Hauptspeicher dient beispielsweise ein CD-ROM oder ein Festplattenspeicher. Bei diesem Speichertyp wird vom Prozessor eine virtuelle Adresse erzeugt, die von der virtuellen Speicherverwaltung in die physikalische Adresse, unter welcher das gesuchte Datum im Hauptspeicher, also beispielsweise auf der Festplatte liegt, gewandelt wird. Dabei ist der virtuelle Adressraum wesentlich größer als der physikalische Adressraum, beide stehen in keinem Zusammenhang. Tritt ein page fault auf, so wird beim virtuell memory der Prozessor hingegen nicht angehalten, sondern es wird lediglich ein Interrupt-Befehl gegeben, der das momentan vom Prozessor verarbeitete Programm anhält, der Prozessor selbst ist jedoch noch in der Lage, andere Programme bzw. Vorgänge zu bearbeiten, während versucht wird, die fehlenden Daten beispielsweise aus einem Hilfsspeicher herauszuladen. Jedoch ist dieses Laden der Daten sehr zeitaufwendig und dauert um ein Vielfaches länger als beim Cache-Speicher.

Beide Konzepte sind vor allem dann nicht geeignet, wenn in einem Prozessorbaustein integrierte Programme bzw. Datenspeicher durch einen externen Speicher ergänzt werden sollen. Solche Konfigurationen findet man beispielsweise in Embeded-systems, deren Anwendung unterschiedliche Anforderungen an das Echtzeitverhalten haben. Typische Anwendungen sind wie beschrieben die mobile Funktelefonie und dergleichen.

Der Erfindung liegt damit das Problem zugrunde, ein Prozessor-Speicher-System anzugeben, das den Anschluss eines Speichers an einen hochintegrierten Prozessorbaustein ermöglicht, wobei zum einen ein schneller Datentransfer bzw. eine schnelle Datenverarbeitung seitens des Prozessors ermöglicht sein soll, zum anderen aber auch bei einem Datenzugrifffehlschlag der Prozessorbetrieb nicht beeinträchtigt werden soll.

Zur Lösung dieses Problems ist ein Prozessor-Speicher-System vorgesehen, umfassend:
- einen Prozessorbaustein mit einem Prozessor und wenigstens einem ersten integrierten RAM-Speicher,
- wenigstens einen über ein Interface mit dem Prozessorbaustein gekoppelten zweiten üblicherweise externen Speicher,
- einen am Prozessorbaustein integrierten programmierbaren Speicherverwaltungsbaustein, welcher bei einer vom Prozessor angeforderten Datenadresse prüft, ob diese Datenadresse in dem ersten RAM-Speicher, der als schneller Speicher dient und in den Daten aus dem externen Speicher vorauseilend geladen sind, vorhanden sind,
- wobei bei Vorhandensein der Daten im RAM-Speicher der Speicherverwaltungsbaustein auf die RAM-Speicheradresse, unter welcher die zur Datenadresse zugehörigen Daten liegen, zeigt und die Daten aus dem RAM-Speicher ausgelesen werden,
- wobei bei Nichtvorhandensein der Daten im RAM-Speicher der Speicherverwaltungsbaustein einen Interrupt-Befehl an den Prozessor gibt, welcher anschließend das Nachladen der gesuchten Daten unter der angegebenen Datenadresse aus dem externen Speicher in den RAM-Speicher veranlasst.

Dem erfindungsgemäß vorgesehenen programmierbaren Speicherverwaltungsbaustein kommt bei dem vorgeschlagenen Prozessor-Speicher-System eine zentrale Rolle zu. Er verhält sich zum einen wie ein Cache-Speicher ohne einen speziell ausgebildeten Speicherteil, als zugeordneter Speicher kommt hier ein gewöhnlicher RAM-Speicher zum Einsatz Ein solches Verhalten zeigt der Speicherverwaltungsbaustein, wenn die Datenadresse vom Prozessor an ihn gegeben wird und er dieselbe in dem zugsordneten memory map sucht und findet. Ist sie nämlich vorhanden, liegt sie also bereits im RAM-Speicher, so "verbiegt" der Speicherverwaltungsbaustein den Adresszeiger und ermöglicht das Auslesen der Daten aus dem jeweiligen Speicherplatz im RAM-Speicher. Der Speicherverwaltungsbaustein agiert hier also so wie man es von einem gewöhnlichen Cache-Speicher kennt.

Im Falle eines "cachemiss", wenn also die Datenadresse nicht im RAM-Speicher vorhanden ist, agiert der Speicherverwaltungsbaustein wie ein programmierbarer virtuell memory und nicht so wie man es vom Cache-Speicher kennt. Denn es wird bei einem festgestellten Nichtvorhandensein der gesuchten Datenadresse ein programmierter Interrupt-Befehl an den Prozessor gegeben, was dazu führt, dass lediglich die laufende Routine angehalten wird. Der Prozessor selbst ist für weitere Tätigkeiten betriebsbereit. Es erfolgt also nicht wie beim normalen Cache-Speicher ein wait, sondern lediglich ein Interrupt, der über den Speicherverwaltungsbaustein initiiert wird. Der Prozessor führt dann selbständig die notwendigen Tätigkeiten zum Nachladen der gesuchten Datenadresse aus. Währenddessen ist der Speicherverwaltungsbaustein passiv, das heißt, er greift insoweit nicht weiter in den Betrieb ein. Erst wenn der Nachladeprozess abgeschlossen ist und der Prozessor zur weiteren Bearbeitung der per Interrupt-Befehl gestoppten Routine zurückkehrt wird der Speicherverwaltungsbaustein wieder "zurückgesetzt" und agiert erneut im Sinne eines Cache-Speichers, sofern die nachfolgend gesuchte Datenadresse vorhanden ist.

Mit dem erfindungsgemäßen Prozessor-Speicher-System ist es vorteilhaft grundsätzlich möglich, Programme aus einem zugeschalteten externen Speicher abarbeiten zu können, wobei unter dem Begriff "Programme" sämtliche Lesedaten fallen, wie beispielsweise Programme selbst oder aber auch Tabellendaten etc. Durch die gegebene Flexibilität kann die Tätigkeit des Speicherverwaltungsbausteins, also die Speicherverwaltung selbst für den Anwendungsprogrammierer verdeckt bleiben oder aber gegebenenfalls durch die Anwendung selbst beeinflusst werden. Vorteilhaft sind bei dem erfindungsgemäßen System alle Vorteile eines schnellen Cache-Speichers mit den Vorteilen eines virtuellen Speichers, nämlich andere Aufgaben während des Ladens von Daten mittels des Prozessors abzuarbeiten, kombiniert.

Es ist zweckmäßig, wenn ein Datenadressregister vorgesehen ist, in dem die Datenadresse der im RAM-Speicher seitenweise hinterlegten Daten abgelegt sind, um dem Speicherverwaltungsbaustein ein einfaches Überprüfen der angefragten Datenadresse zu ermöglichen. Das Datenadressenregister ist bevorzugt als 4-Seiten-Adressregister ausgebildet. Beim erfindungsgemäßen System ist es im Hinblick auf die gegebene Möglichkeit, dass der Prozessor auch während des Nachladens anderweitig aktiv sein kann, nicht erforderlich, großvolumige Adressregister vorzusehen. Vielmehr ist es ausreichend, wenn das Datenadressregister nur wenige Seitenadressen beinhaltet, das heißt, es sind insgesamt relativ wenig Seiten, beispielsweise vier, im RAM-Speicher vorauseilend nach Art eines Cache-Speichers abgelegt. Durch die Beschränkung auf wenige Seiten ist vorteilhaft keine Umsetzungstabelle mit einem Eintrag für jede mögliche Speicherseite nötig, wie dies bei bekannten virtuell memories der Fall ist. Beim Überprüfen der angeforderten Datenadresse müssen lediglich die wenigen Adressinformationen der vorhandenen Speicherseiten mit der geforderten Adresse verglichen werden, so dass der Vergleich insgesamt sehr schnell vonstatten gehen kann. Das Verfahren selbst ist voll assoziativ.

Zweckmäßig ist es ferner, wenn ein zweites Datenadressregister vorgesehen ist, wobei im Rahmen der Adressprüfung zunächst die Adressen im ersten Datenregister überprüft werden, weiterhin wird bei Nichtvorhandensein der gesuchten Adresse die Registeradresse, die angibt, in welchem Register die Überprüfung erfolgt, durch den Prozessor geändert, so dass die Überprüfung im zweiten Datenadressregister erfolgen kann. Dies ermöglicht es vorteilhaft, dass zum einen primär das Suchen im ersten Adressregister erfolgt, da davon auszugehen ist, dass in der Regel die gesuchten Datenadressen dort auch gefunden werden. Nur dann, wenn kein Treffer erfolgt, wird quasi "umgeschaltet" und der Speicherverwaltungsbaustein sucht im zweiten Adressregister, welches ebenfalls als 4-Seiten-Register ausgeführt sein kann. Das heißt, es wird auf diese Weise eine Registereweiterung erreicht, ohne dass das erweiterte Register bei jedem Suchlauf komplett durchgesucht werden muss. Der Prozessor prüft nach Gabe des Interrupt-Befehls, wenn also die Adresse im ersten Register nicht gefunden wird, ob die Adresse im zweiten Register ist, das heißt, in diesem Fall nimmt der Prozessor selbst diese Adressprüfung vor. Ist dies der Fall so erfolgt die Umprogrammierung des Speicherverwaltungsbausteins, der dann im zweiten Adressregister sucht und auf die dort aufgefundene gesuchte Adresse zeigt. Es handelt sich hier also um eine programmierbare Umsetzung. Diese Ausführung ist nicht auf ein zweites Datenadressregister beschränkt sondern kann beliebig dupliziert werden.

Zweckmäßig kann es ferner sein, dass das zweite oder weitere Datenadressregister nicht als Register in dem Speicherverwaltungsbaustein vorhanden sind sondern in einem RAM-Speicher. In diesem Fall programmiert der Prozessor vorhandene Datenadressregister im Speicherverwaltungsbaustein neu anstelle eines Umschaltens zu einem anderen Datenadressregister.

Wenngleich die für die Durchführung des Interrupts erforderliche Interrupt-Routine im ohnehin vorhandenen RAM-Speicher abgelegt sein kann, ist es zweckmäßig, wenn im Prozessorbaustein wenigstens ein weiterer Speicher integriert ist, in dem eine Interrupt-Routine abgelegt ist, auf die der Prozessor nach Gabe des Interrupt-Befehls vom Speicherverwaltungsbaustein zugreift. Dabei kann die Interrupt-Routine so ausgestaltet sein, dass sie die vorangehend beschriebene Umprogrammierung der Datenadressregister einleitet. Dieser weitere Speicher kann ein ROM-Speicher oder ein Flashspeicher sein. Erfindungsgemäß kann die Größe der vorzugsweise seitenweise aus dem externen Speicher zu ladenden Daten bzw. die Größe der Speicherbereiche im RAM-Speicher durch den programmierbaren Speicherverwaltungsbaustein veränderbar bzw. einstellbar sein. Dies ist ein veiterer Vorteil der Programmierbarkeit des quasi als Sortware gesteuerter Cache agierenden Speicherverwaltungsbausteins, denn er ermöglicht ein Speicher-Management mit flexibler Seitengröße, was einfach durch entsprechendes Programmieren des Speicherverwaltungabausteins möglich ist. Dies ist auch unter anderem deshalb möglich, da beim erfindungsgemäßen System anstelle eines üblichen fest zugeordneten Cache-Speichers ein großer RAM-Speicher verwendet wird, der zum Speichern der benötigten Daten dynamisch benutzt werden kann. Denn die Aufteilung im RAM-Speicher zwischen Datenspeicher, wo andere Daten als die aus dem externen Speicher geladenen Daten hinterlegt sind, und dem Seitenspeicher, wo die externen Speicherdaten hingeschrieben werden wird erst durch die Anwendung bestimmt und kann durch entsprechende Programmierung der Speicherverwaltung dynamisch verändert bzw. konfiguriert werden.

Ein weiterer Vorteil der erfindungsgemäß vorgesehenen flexiblen Speichermanagements ist die Möglichkeit, beliebige Nachladealgorithmen mittels des programmierbaren Speicherverwaltungsbausteins zu realisieren. Denn auch das Nachladen, das über den Interrupt-Befehl initiiert wird, kann durch entsprechende Programmierung des Speicherverwaltungsbausteins und der Nachladeroutine flexibel gestaltet werden. So ist es beispielsweise möglich, nicht nur die fehlende Seite nachzuladen, sondern auch die nachfolgende oder dergleichen. Hier sind beliebige Nachladealgorithmen denkbar.

Zum Nachladen der Daten aus dem externen Speicher ist zweckmäßigeweise eine DMA-Einheit (Direct Memory Acess Unit) im Prozessorbaustein integriert. Diese wird vom Prozessor im Nachladefall entsprechend programmiert, die fehlenden Seite(n) auszulesen und im RAM-Speicher einzuschreiben.

Der externe Speicher selbst kann ein paralleler Flashspeicher sein, der über ein geeignetes Interface am Prozessorbaustein gekoppelt ist. Zweckmäßig ist es, wenn der externe Speicher ein serieller Flashspeicher ist, der über ein die zum Prozessorbaustein zu übertragenden Daten von seriell nach parallel wandelndes SPI-Interface mit dem Prozessorbaustein gekoppelt ist. Die parallelen Daten wiederum werden mit Hilfe der optional vorgesehenen DMA-Einheit vom und zum internen RAM-Speicher übertragen. Dadurch wird der Datentransfer weitestgehend von anderen Prozessoraktivitäten entkoppelt.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipskizze eines erfindungsgemäßen Prozessor-Speicher-Systems,
- Fig 2: eine Prinzipskizze zur Darstellung der Arbeitsweise des Systems aus Fig. 1, und
- Fig 3: eine Prinzipskizze zur Darstellung der Arbeitsweise mit zwei Datenadressregistern.

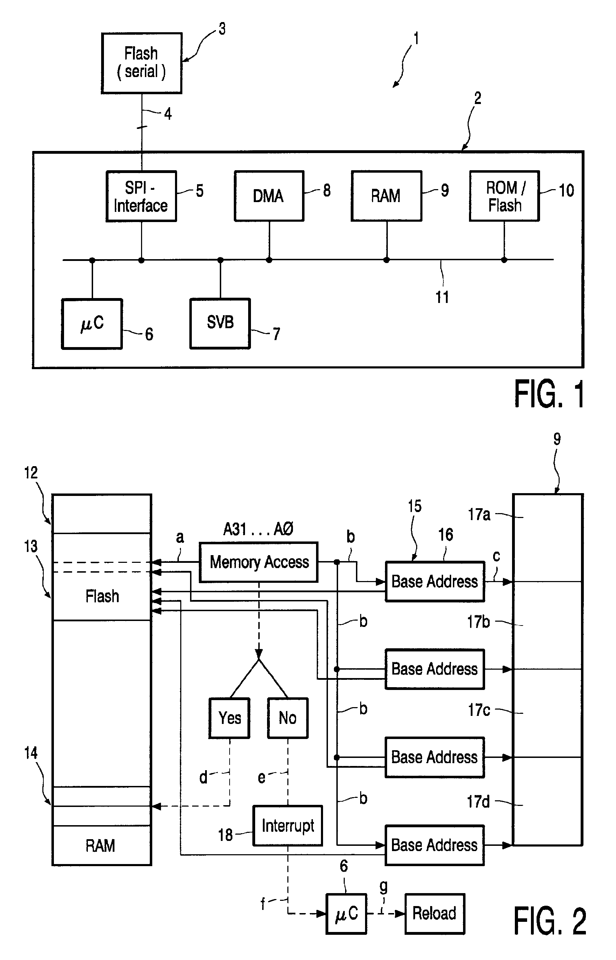

Fig 1 zeigt ein erfindungsgsmäßes Prozessor-Speicher-System 1, bestehend aus einem Prozessorbaustein 2 und einem externen, hier als serieller Flashspeicher ausgeführten Flashspeicher 3. Dieser ist über eine Kommunikationsleitung 4 mit einem Interface 5, hier ein SPI-Interface, mit dem Prozessorbaustein 2 verknüpft. Über das SPI-Interface erfolgt die Umwandlung der vom seriellen Flashspeicher 3 gelieferten seriellen Daten in parallele Daten und bei umgekehrter Kommunikationsrichtung entsprechend umgekehrt.

Im Prozessorbaustein 2 ist ferner ein Prozessor 6 integriert sowie ein Speicherverwaltungsbaustein 7, der die eigentlichen Speicherverwaltungsaumahmen übernimmt. Ferner ist eine DMA-Einheit 8 sowie ein RAM-Speicher 9 vorgschen. Über die DMA-Einheit 8 werden Daten aus dem externen Flashspeicher 3 via Interface 5 in den RAM-Speicher 9 geladen und umgekehrt Daten an den externen Flashspeicher 3 gegeben. Schließlich ist ein weiterer Speicher 10, bei dem es sich beispielsweise um einen ROM-Speicher oder um einen weiteren Flashspeicher handeln kann, am Prozessorbaustein 2 integriert. Sämtliche genannten Bausteine - bis auf den externen Flashspeicher 3 - hängen an einem gemeinsamen Kommunikationsbus 11.

Zentraler Baustein bei dem erfindungsgemäßen System 1 ist der programmierbare Speicherverwaltungsbaustein 7, dessen Arbeitsweise im Prinzip aus Fig. 2 ersichtlich ist. Während des Betriebs gibt der Prozessor 6 über den Bus 11 laufend Datenadressanfragen an den Speicherverwaltungsbaustein 7. Diese Datenadressen zeigen auf Datenblöcke im externen Flashspeicher 3, die der Prozessor während der laufenden Anwendung zum Arbeiten benötigt. Ein Teil dieser Daten ist im Betrieb über die DMA-Einheit 8 bereits in dem RAM-Speicher 9 vorauseilend geladen. Der RAM-Speicher 9 wird als schneller Speicher verwendet, dem eine Funktion eines Cache-Speichers zukommt. Aus dem schnellen RAM-Speicher 9 können dort vorhandene Daten wesentlich schneller an den Prozessor 6 übertragen werden als aus dem langsam arbeitenden externen Flashspeicher 3. Dem Speicherverwaltungsbaustein 7 kommt hierbei die zentrale Verwaltungsfunktion zu. Eine vom Prozessor 6 gegebene Adresse - im Beispiel die Adresse A31 ... A0 wird an den Speicherverwaltungsbaustein 7 gegeben. Dieser überprüft zunächst, ob es sich um eine Adresse handelt, die dem externen Flashspeicher 3 zuzuordnen ist. Die memory map 12 enthält die Start- und Endadressen des externen Speichers. Wird nun die genannte Adressanfrage gegeben so überprüft der Speichervetwaltungsbaustein 7 zunächst, ob es sich um eine Flashspeicheradresse handelt (Pfeil a). Falls ja wird die gegebene Adresse mit den in einem Datenadressregister 15 hinterlegten Basisadressen 16 verglichen (Pfeile b). In dem Datenadressregister 15 sind nur vier Basisadressen 16 hinterlegt, da im RAM-Speicher 9, der ausschnittsweise rechts neben dem Adressregister 15 dargestellt ist, nur vier Seiten 17a, 17b, 17c, 17d aus dem externen Flashspeicher 3 eingeladen sind Der übrige Speicherplatz im RAM-Speicher 9 steht zum Speichern anderweitiger Daten zur Verfügung. Jede der Basisadressen 16 gibt die Anfangsadresse des externen Speicheradressbereiches an, der in der jeweiligen RAM-Speicherseite 17a, 17b, 17c, 17d abgelegt ist. Alle Daten im Bereich von der Basisadresse bis zur Basisadresse+Seitengröße-1 sind also im RAM abgelegt. Die Abbildung der vom Prozessor gegebenen externen Speicheradresse in eine RAM-Speicheradresse ist in Fig. 2 fest ausgelegt und wird durch die jeweiligen Pfeile C dargestellt.

Ergibt nun die Überprüfung gemäß Pfeil b, dass die gesuchte Adresse dem RAM-Speicher zugeordnet werden kann, das heißt, dass die Seite im RAM-Speicher bereits vorliegt, so wird, siehe den gestrichelten Pfeil d im Ast "Yes", die Datenadresse so "verbogen" bzw. umgesetzt, dass sie auf die anderslautende Adresse im RAM-Speicher deutet, unter welcher die ursprünglich mit der Adresse "A31 ... A0" gesuchten Daten im RAM 9 stehen. Diese Daten werden dann in den Prozessor 6 eingeladen.

Ergibt der Vergleich, dass die Daten nicht vorliegen, so wird, siehe Pfeil e im Ast "No", ein Interrupt-Befehl 18 vom Speicherverwaltungsbaustein 7 an den Prozessor 6 gegeben (siehe Pfeil f). Dies bewirkt nun, dass der Mikroprozessor die laufende Routine anhält und beispielsweise aus dem zweiten Speicher 10 im Prozessorbaustein 2 eine Interrupt-Routine startet. Anschließend wird z B. durch die Routine seitens des Prozessors 6 das Nachladen der fehlenden Daten aus dem Flashspeicher 3 angestoßen (siehe Pfeil g). Hierzu kommuniziert der Prozessor 6 mit der DMA-Einheit 8, der die gesuchte Flashspeicheradresse gegeben wird, damit diese das Einladen vornehmen kann. Der Prozessor 6 steht während des Nachladens des mehr oder weniger großen Datenblocks zur Durchführung anderer Aufgaben zur Verfügung, das heißt, er ist nicht wie bei einem normalen Cache-Speicher-Betrieb in einem Wait-Zustand, der sämtliche Prozessoraktivitäten unterbindet, sondern kann sich anderen Aufgaben widmen. Lediglich die laufende Routine, bei der die Daten fehlen, wird einstweilen unterbrochen. Sobald die Daten im schnellen RAM-Speicher 9 eingeladen sind wird der Prozessor 6 informiert. Insgesamt lässt diese Verfahrensweise ein quasi kontinuierliches Arbeiten des Prozessors auch im Falle eines Datenfehlzugriffs zu.

Der Speicherverwaltungsbaustein verhält sich also abhängig davon, ob ein Datenzugriff erfolgreich ist oder nicht, nach Art eines Caches oder nach Art einer programmierbaren virtuell memory. Generell arbeitet der Speicherverwaltungsbaustein 7 nach Art eines Caches, in dem er eingehende Datenadressen überprüft, ob sie im Adressregister vorhanden sind bzw. ob sie im RAM-Speicher 9 vorliegen. Ist dies der Fall wird die gegebene Adresse entsprechend verbogen, so dass über den Speicherverwaltungsbaustein 7 auf den jeweiligen Speicherplatz im RAM-Speicher gezeigt wird und die Daten herausgelesen werden können. Im Falle eines "cachemiss" wird dieser als "page fault" behandelt, wie dies von einem virtuell memory-Baustein her bekannt ist. In diesem Fall wird also - anders als bei einer reinen Cache-Funktion - lediglich ein Interrupt-Befehl gegeben, der die laufende Anwendung am Prozessor unterbricht und den Nachladevorgang initiiert.

Beim reinen Cash-Betrieb würde in diesem Fall ein wait-state gegeben was dazu führt, dass der Prozessor insgesamt in seinem gesamten Arbeiten blockiert ist und zwar so lange, bis die Daten aus dem langsamen Flashspeicher übertragen sind Dies kann beachtlich lange dauern, da der externe Flashspeicher ein langsamer Speicher ist. Beim erfindungsgemäßen System aber befindet sich aber wie gesagt der Prozessor lediglich in einem Interrupt, kann also andere Vorgänge bearbeiten, während über die DMA-Einheit die fehlenden Informationen in den RAM-Speicher 9 übertragen werden. Währenddessen verhält sich der Speicherverwaltungsbaustein 8 passiv.

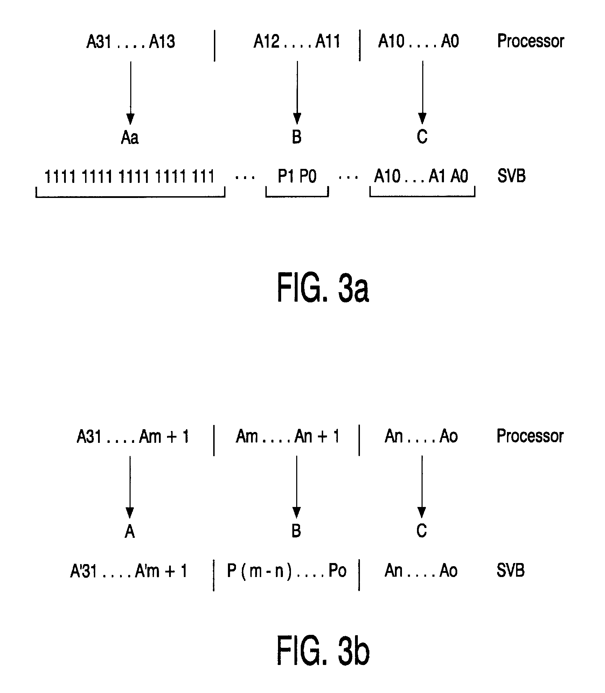

Fig. 3a zeigt eine feste Umsetzung der vom Prozessor gegebenen externen Speicheradresse (Pfeil c, Fig. 2) in eine RAM-Speicheradresse im Fall, dass der gesuchte externe Speicheradressinhalt im RAM-Speicher geladen ist (Pfeil d, Fig. 2). Zu jedem der Register ist rechtsstehend die jeweilige "Arbeitsadresse", die von dem Speicherverwaltungsbaustein 7 "abgearbeitet" wird, angegeben. Der erste Adressblock A gibt die Basisadresse aller Seiten im RAM-Speicher an. Im gezeigten Beispiel lautet die Adresse 1111 1111 1111 1111 111 und weist darauf hin, dass der RAM-Speicherbereich, in dem sich die externen Speicherdaten befinden, am oberen Ende der Adress Map befinden.

Der Datenblock B gibt die jeweilige Seiteninformation an, wo sich die gesuchten Adressdaten befinden. P0 und P1 werden hier abhängig davon gesetzt, in welchem der vier Basisadressregister die Basisadresse der vom Prozessor gegebenen externen Speicheradresse ("Arbeitsadresse") gefunden wurde (Pfeil b, Fig. 2). Schließlich enthält die "Arbeitsadresse" noch den Block C mit der Adresse innerhalb einer Seite, im gezeigten Beispiel An... A0. Dieser Teil der Adresse wird vom Prozessor 6 direkt übernommen. Teil Aund B wird von der Speicherverwaltungseinheit wie angegeben verändert.

Fig. 3b zeigt aber eine flexible Umsetzung Im Unterschied zu einer festen Umsetzung sind hier die Grenzen zwischen den Bereichen A, B und C frei wählbar. Die Länge von B ist durch die Anzahl der Basisadressregister bestimmt. Der Teilbereich B und C wird nach der gleichen Methode wie bei der festen Umsetzung abgebildet. Für den Teilbereich Akann eine beliebige RAM-Speicher-Basisadresse programmiert werden. Diese erlaubt eine programmierbare Lage und Größe der RAM-Speicherseiten. Es ist also hier eine voll flexible und von dem Interrupt in der Speicherverwaltungseinheit programmierte Umsetzung realisiert.

Ferner ist es möglich, die Nachladestrategie durch entsprechende Programmierung des Speicherverwaltungsbausteins zu beeinflussen. So ist es beispielsweise möglich, im Falle des Nachladens nicht nur die gesuchte Seite bzw. den gesuchten Datenblock sondern auch den folgenden einzuladen. Dabei kann durch die Programmierung des Speicherverwaltungsbausteins auch das Interruptverhalten beeinflusst werden. Dies kann derart geschehen, dass Interrupts schon ausgelöst werden, wenn die Daten eigentlich schon im RAM-Speicher geladen sind. Dies ermöglicht eine schnelle Fortsetzung des Programmes ohne Nachladen und kann das Laden der nächstfolgenden Seite vorausschauend starten. Auch erlaubt die Programmierbarkeit eine flexible Speicheraufteilung des RAM-Speichers, das heißt, der für das Einladen der Flashspeicherdaten vorgesehene Bereich kann dynamisch verändert werden.

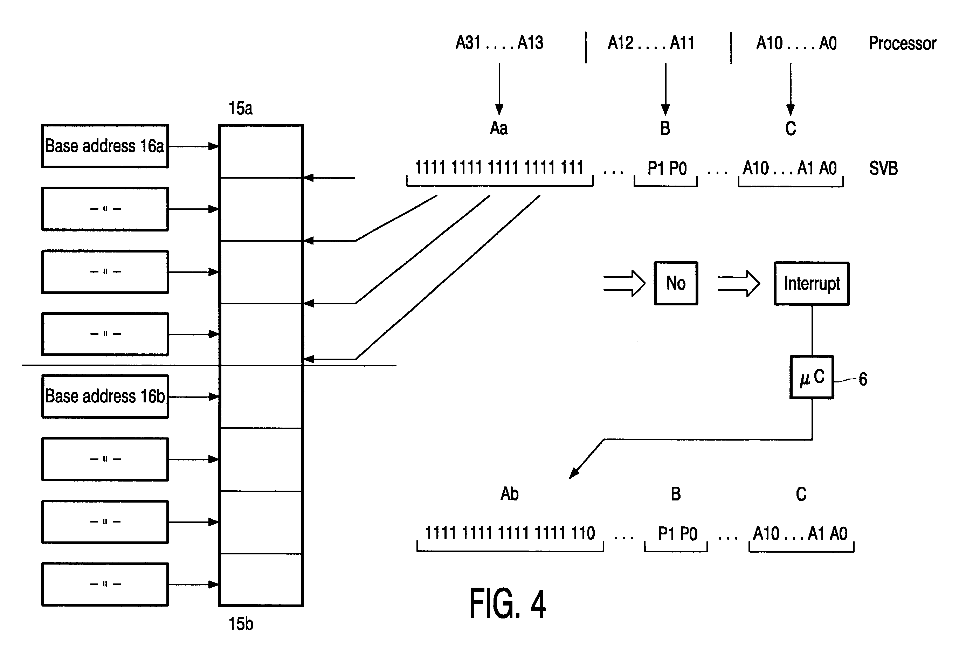

Fig. 4 zeigt schließlich die Möglichkeit, mit einem erweiterten Datenadressregister zu arbeiten. Gezeigt sind zwei Datenadressregister 15a, 15b, wobei das Register 15b dem Register 15a nachgeschaltet ist. Das Register 15a entspricht im Wesentlichen dem gemäß Fig. 2. Das Register 15b ist ebenfalls als 4-Seiten-Adressregister ausgeführt. Der Prozessor bestimmt durch eine Programmierung, ob die Datenadressregister 15a oder 15b aktiv sind. D.h., der Speicherverwaltungsbaustein arbeitet entweder mit dem Datenadressregister 15a oder aber 15b.

## Patentansprüche

1. Prozessor-Speicher-System, umfassend:
- einen Prozessorbaustein (2) mit einem Prozessor (6) und wenigstens einem ersten integrierten RAM-Speicher (9),
- wenigstens einen über ein Interface (5) mit dem Prozessorbaustein (2) gekoppelten zweiten externen Speicher (3),
- einen am Prozessorbaustein (2) integrierten programmierbaren Speicherverwaltungsbaustein (7), welcher bei einer vom Prozessor (6) angeforderten Datenadresse prüft, ob diese Datenadresse in dem ersten RAM-Speicher (9), der als schneller Speicher dient und in den Daten aus dem externen Speicher (3) vorauseilend geladen sind, vorhanden sind,
- wobei bei Vorhandensein der Datenadresse im RAM-Speicher (9) der Speicherverwaltungsbaustein (7) auf die RAM-Speicheradresse, unter welcher die zur Datenadresse gehörenden Daten liegen, zeigt und die Daten aus dem RAM-Speicher (9) ausgelesen werden,
- wobei bei Nichtvorhandensein der Datenadresse im RAM-Speicher (9) der Speicherverwaltungsbaustein (7) einen Interrupt-Befehl an den Prozessor (6) gibt, welcher anschließend das Nachladen der gesuchten Datenadresse aus dem externen Speicher (3) in den RAM-Speicher (9) veranlasst.

2. Prozessor-Speicher-System nach Anspruch 1,
**dadurch gekennzeichnet,**
**dass** ein Datenadressregister (15, 15a, 15b) vorgesehen ist, in dem die Datenadressen der im RAM-Speicher (9) seitenweise hinterlegten Daten abgelegt sind.

3. Prozessor-Speicher-System nach Anspruch 2,
**dadurch gekennzeichnet,**
**dass** das Datenadressregister (15, 15a, 15b) als 4-Seiten-Adressregister ausgebildet ist.

4. Prozessor-Speicher-System nach Anspruch 2 oder 3,
**dadurch gekennzeichnet,**
**dass** ein zweites Datenadressregister (15b) vorgesehen ist, wobei im Rahmen der Adressprüfung zunächst die Adressen im ersten Datenadressregister (15a) überprüft werden, und dass bei Nichtvorhandensein der gesuchten Adresse die Registeradresse, die angibt in welchem Register die Überprüfung erfolgt, durch den Prozessor (6) veränderbar ist, so dass die Prüfung im zweiten Datenadressregister (15b) erfolgen kann.

5. Prozessor-Speicher-System nach einem der vorangehenden Ansprüche,
**dadurch gekennzeichnet,**
**dass** im Prozessorbaustein (2) wenigstens ein weiterer Speicher (10) integriert ist, in dem eine Interrupt-Routine abgelegt ist, auf die der Prozessor (6) nach Gabe des Interrupt-Befehls vom Speicherverwaltungsbaustein (7) zugreift.

6. Prozessor-Speicher-System nach Anspruch 4,
**dadurch gekennzeichnet,**
**dass** der weitere Speicher (10) ein ROM-Speicher oder ein Flashspeicher ist.

7. Prozessor-Speicher-System nach einem der vorangehenden Ansprüche,
**dadurch gekennzeichnet,**
**dass** die Größe der vorzugsweise seitenweise aus dem externen Speicher (3) zu ladenden Daten bzw. die Größe der Speicherbereiche im RAM-Speicher (9) durch den programmierbaren Speicherverwaltungsbaustein (7) veränderbar bzw. einstellbar ist.

8. Prozessor-Speicher-System nach einem der vorangehenden Ansprüche,
**dadurch gekennzeichnet,**
**dass** jeweils nur die fehlenden Daten, insbesondere in Seitenform nachladbar sind, oder dass sowohl die fehlenden als auch die seriell nachfolgenden Daten, insbesondere in Seitenform nachladbar sind.

9. Prozessor-Speicher-System nach einem der vorangehenden Ansprüche,
**dadurch gekennzeichnet,**
**dass** zum Nachladen der Daten aus dem externen Speicher (3) eine DMA-Einheit (8) im Prozessorbaustein (2) integriert ist.

10. Prozessor-Speicher-System nach einem der vorangehenden Ansprüche,
**dadurch gekennzeichnet,**
**dass** der externe Speicher (3) ein serieller Flashspeicher ist, der über ein die zum Prozessorbaustein (2) zu übertragenden Daten von seriell nach parallel wandelndes Interface (5) mit dem Prozessorbaustein (2) gekoppelt ist.

11. Prozessor-Speicher-System nach Anspruch 10,
**dadurch gekennzeichnet,**
**dass** das serielle Interface ein SPI-Interface ist.

12. Prozessor-Speicher-System nach einem der vorangehenden Ansprüche,
**dadurch gekennzeichnet,**
**dass** der externe Speicher ein Flashspeicher ist.

13. Prozessor-Speicher-System nach einem der vorangehenden Ansprüche,
**dadurch gekennzeichnet,**
**dass** der externe Speicher innerhalb des Prozessor-Speicher-Systems integriert ist.

14. Prozessor-Speicher-System nach einem der vorangehenden Ansprüche,
**dadurch gekennzeichnet,**
**dass** die Adressumsetzung entweder fest oder flexibel programmierbar ist.
